# EUROPEAN PATENT SPECIFICATION

(11) **EP 0 384 324 B1**
(45) Date of publication and mention of the grant of the patent: **27.04.1994**
(21) Application number: 90103059.3
(22) Date of filing: 16.02.1990
(51) Int. Cl.: G01N 27/28

(54) **Cell for use in flow through type electrode**
Zelle für Durchfluss-Elektrode
Cellule pour électrode à écoulement

(30) Priority: 23.02.1989 JP 20665/89 U
(43) Date of publication of application: 29.08.1990
(73) Proprietor: HORIBA, LTD., Minami-ku Kyoto (JP)
(72) Inventor: Kohno, Takeshi, Hirakata-city, Osaka (JP); Uematsu, Hiroaki, Kusatsu-city, Shiga-prefecture (JP); Nishikawa, Katsumi, Minami-ku, Kyoto (JP)
(74) Representative: TER MEER STEINMEISTER & PARTNER GbR

(56) References cited:
- GB-A- 2 076 969
- PATENT ABSTRACTS OF JAPAN, vol. 10, no. 183 (P-472)(2239), 26 June 1986; & JP-A-61030753
- PATENT ABSTRACTS OF JAPAN, vol. 9, no. 250 (P-394)(1973), 8 October 1985; & JP-A-60100756
- ANALYTICAL CHEMISTRY, vol. 57, no. 9, August 1985, pages 1810-1814, Washington, US; W.R. LaCOURSE et al.: "Photoelectrochemical Detector for High-Performance Liquid Chromatography and Flow Injection Analysis"

## Description

The present invention relates to a cell as stated in the preamble of claim 1. Such kind of cell is already known from GB-A-2 076 969. This known cell for use in a flow through type electrode comprises a sample passage within a transparent cell body and formed so that a response portion of an electrode body inserted into a step cell body faces and contacts with the side of the sample passage. Particularly, a flow through type electrode may comprise a plurality of electrode bodies for an analysis of a plurality of substances contained in one sample.

With such a flow through type electrode, if said sample passage is thin, the passage is often clogged with foreign matters contained in the sample or bubbles are generated producing errors in measurement or deteriorate the performance of the electrode.

So, in order to visually confirm said clogging and the like from the outside of the cell body, the cell body itself has been formed from transparent resin, glass and the like.

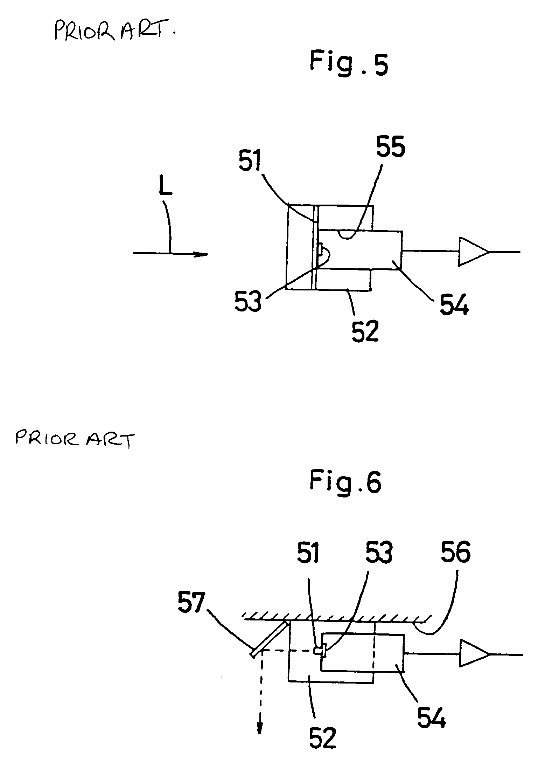

Another flow through type electrode having a transparent cell body is shown in Figs. 5 and 6. The cell body 52 is mounted on a front surface of a fitting panel (not shown) so that a sample passage 51 can be observed from the front (right surface side vertical to the paper surface in Fig. 5).

Further, an electrode body 54 provided with a response portion 53 at a pointed end thereof is fitted in a hole 55 formed in the cell body 52 from, for example, the right side of the cell body 52. Therefore, with the cell having the said construction, a response section, where the sample passage 51 is brought into contact with the response portion 53, can not be observed from said front surface side but can only be seen from the left side in Fig. 5, in short from a direction shown by an arrow L. But in this case, in the event that other members are disposed on the left side of the cell body 52 or the cell body 52 is disposed in a depth far from the surface of the fitting panel, the response portion can not be observed also from said direction shown by the arrow L.

On the other hand, there is the possibility to observe the response portion from the front side of the cell body 52 (lower side in Fig. 6) by providing a reflecting mirror 57 on the left side of the cell body 52 mounted on the front surface of the fitting panel 56 so that an angle of about 45° may be formed between the reflecting mirror 57 and the front surface of said fitting panel 56.

However, in this case, the reflecting mirror 57 is provided separately from the cell body 52 so that not only a space to spare for disposing the reflecting mirror 57 is required but also said image can not be obtained depending upon the position of the cell body 52 according to circumstances.

It is an object of the present invention to provide a cell for use in a flow through type electrode having a construction for surely observing the response portion within the cell body from the fitting front surface side without requiring said further space to spare.

In order to achieve the above described object, an inclined surface portion is integrally formed with the cell body on an outer side thereof which is opposite to a side on which said electrode body is inserted, said surface portion is arranged parallel to the main direction of said sample passage and inclined relative to the insertion direction of said electrode body.

According to the present invention, an image of the response section, where the sample passage is brought into contact with the response portion of the electrode body, can be observed from the fitting front direction of the cell body through said inclined portion by a prismatic action of the inclined portion. Said inclined portion is formed integrally with the cell body under the condition that, for example, the cell body is diagonally cut down so that not only the original installation space of the cell body is not exceeded but also the desired image can be obtained regardless of the original installation condition of the cell body.

One preferred embodiment of the present invention is shown in Figs. 1 to 4, in which
- Fig. 1: is a perspective view showing a condition under which a flow through type enzyme electrode, to which the present invention is applied, is installed;
- Fig. 2: is a partial sectional view showing said flow through type enzyme electrode;
- Fig. 3: is a perspective view showing one example of the cell for use in the flow through type electrode according to the present invention; and
- Fig. 4: is a sectional view of Fig. 3.
- Figs. 5 and 6: are diagrams for describing the prior art.

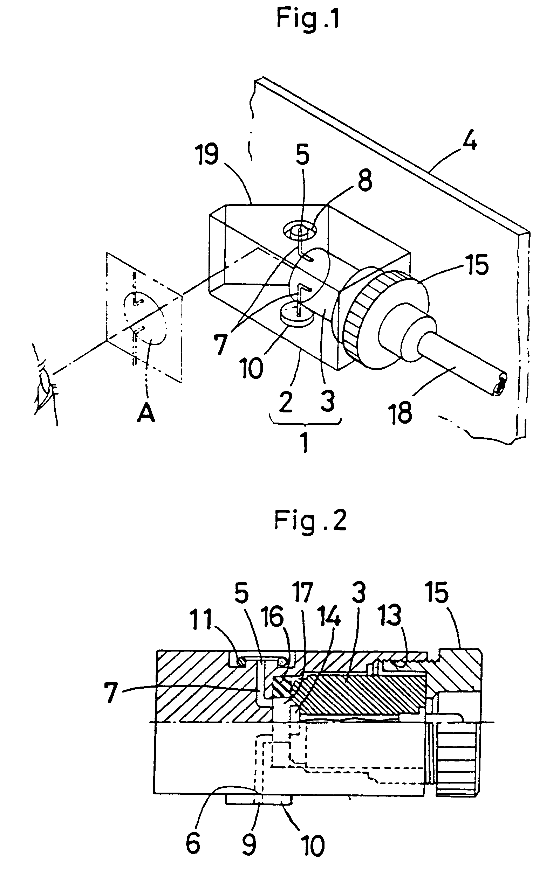

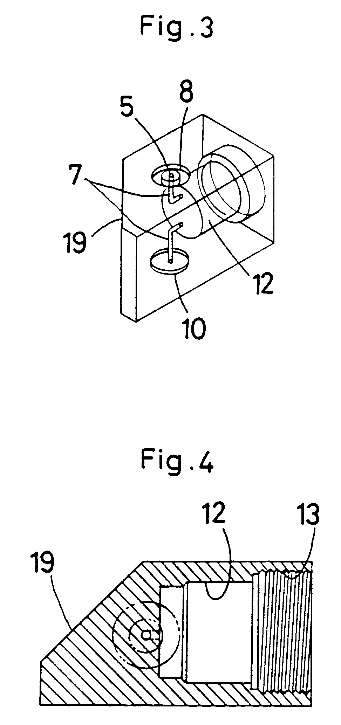

The preferred embodiment of the present ivention is described below with reference to Figs. 1 to 4, in which Fig. 1 shows a flow through type enzyme electrode as one example of a flow through type electrode to which the present invention is applied. Referring now to Fig. 1, reference numeral 1 designates a flow through type enzyme electrode comprising a cell body 2 and an electrode body 3 detachably mounted on said cell body 2 and mounted on a surface of a fitting panel 4.

Said cell body 2 is formed of transparent resin, such as acrylic resin or transparent glass so that the interior thereof may be seen, and as shown in Figs. 2 to 4, is provided with an introduction port 5 for a sample opened at one end face thereof and a discharge port 6 for the sample opened at the other end face opposite to said one end face to form a sample passage 7 within the cell body 2 so that the introduction port 5 may be connected with the discharge port 6. In addition, an almost central portion of said sample passage 7 is formed in a 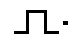 -like shape as seen in front view so as to be communicated with a bottom portion of an electrode-fitting hole 12 which will be mentioned later.

A circular concave portion 8 having a suitable depth is formed around and concentrically with the introduction port 5. In addition, the discharge port 6 is provided with an inserting projection 10 having a height and a diameter corresponding to said concave portion 8 and a through hole 9 communicating therewith so that a plurality of cell bodies 2 may be connected under the condition that the sample passages 7 thereof are compactly connected with each other by inserting said inserting projection 10 into the concave portion 8 of another cell body 2. In addition, referring to Fig. 2, reference numeral 11 designates an O-ring as a sealing member.

Reference numeral 12 designates an electrode fitting hole formed in a direction meeting at right angles with a direction connecting said introduction port 5 with said discharge port 6 and a female thread 13 is formed on an inner circumferential surface on a side of an inlet of said electrode-fitting hole 12. Said electrode body 3 is detachably fitted in said electrode-fitting hole 12 under the condition that a response portion 14 formed at a pointed end thereof faces to the sample passage 7. That is to say, the electrode body 3 is formed of, for example, vinyl chloride resin or epoxy resin and the response portion 14 is formed in a concave portion provided in the center area of a pointed end of the electrode body 3, whereby being pressed against the side of the sample passage 7 by means of a pressing member 15 screwed into the female thread 13. Reference numeral 16 designates a rubber packing positioned on the side of the pointed end of the electrode body 3 and provided with a passage 17 communicating with the sample passage 7 and the response portion 14 faces to said passage 17. In addition, referring to Fig. 1, reference numeral 18 designates a signal-taking out cable for transmitting a signal obtained by the response portion 14 to a computing portion (not shown).

Reference numeral 19 designates an inclined surface portion formed in a cell body portion on a side opposite to the side, on which said electrode body 3 of the cell body 2 is provided, so as to correspond with the response section where said response portion 14 is brought into contact with the sample passage 7. In particular, in the case where an angle of 45° is formed between said inclined surface portion 19 and said response section including the response portion 14 or an angle of 45° is formed between the inclined surface portion 19 and a direction, in which the electrode body 3 is inserted, and thus the cell body 2 has an almost rectangular parallelepiped shape, the inclined surface portion 19 is formed so as to form an angle of 45° relative to an outer wall of the cell body 2. An outer surface of said inclined surface portion 19 is further subjected to a suitable mirror-finishing such as buffing.

With the flow through type enzyme electrode 1 having the above described construction, if the cell body 2 is mounted on a surface of the fitting panel 4 so that the inclined surface portion 19 may be closer to the fitting panel 4, as shown in Fig. 1, under the condition that the cell body 2 is provided with the appointed electrode body 3, the reflected image (shown by an imaginary line A in Fig. 1) of said response section can be visually confirmed from the front surface side of the fitting panel 4, that is the front surface side of the flow through type enzyme electrode 1, by the prismatic action of the inclined surface portion 19.

In this case, a reflecting film or reflecting plate, on which an aluminum or silver reflecting surface has been formed by the vapor deposition, may be provided so that said reflecting surface may be stuck to the surface of the inclined surface portion 19. Thus, not only said reflected image can be made still more clear but also the inclined surface portion 19 can be protected from the injury due to the contact thereof with thumbmarks and other substances.

The angle of inclination of the inclined surface portion 19 can be optionally set. Besides, the present invention can be applied to various kinds of flow through type electrodes, such as pO₂ electrode, pCO₂ electrode and ion electrode, in addition to the above described enzyme electrode.

As above described, according to the present invention, the response section within the cell body can be surely visually seen from the fitting front surface side of the cell body without requiring a space to spare by such a simple device that the inclined surface portion is formed in a part of the cell body.

## Claims

1. A cell for use in a flow through type electrode, comprising a sample passage (7) within a transparent cell body (2) and formed so that a response portion (14) of an electrode body (3) inserted into said cell body (2) faces and contacts with the side of the sample passage (7), **characterized in that** an inclined surface portion (19) is integrally formed with the cell body (2) on an outer side thereof which is opposite to a side, on which said electrode body (3) is inserted, said surface portion (19) is arranged parallel to the main direction of said sample passage (7) and inclined relative to the insertion direction of said electrode body (3).

2. The cell as claimed in claim 1, **characterized in that** said inclined surface portion (19) is subjected to a mirror finishing.

3. The cell as claimed in claim 1, **characterized in that** said inclined surface portion (19) is provided with a reflecting film or a reflecting plate.

4. The cell as claimed in claim 1, **characterized in that** said inclined surface portion (19) is formed so as to form an angle of 45° relative to the insertion direction of the electrode body (3).

## Patentansprüche

1. Zelle für eine Durchflußelektrode, mit einer Probenpassage (7) innerhalb eines transparenten Zellenkörpers (2) und so geformt, daß ein Antwortteil (14) eines in den Zellenkörper (2) eingesetzten Elektrodenkörpers (3) zu einer Seite der Probenpassage (7) gerichtet ist und mit dieser in Kontakt steht, **dadurch gekennzeichnet,** daß am Zellenkörper (2) integral ein geneigter Oberflächenteil (19) an derjenigen Außenseite vorhanden ist, die der Seite gegenüberliegt, an der der Elektrodenkörper (3) eingesetzt ist, und daß der Oberflächenteil (19) parallel zur Hauptrichtung der Probenpassage (7) sowie relativ zur Einsetzrichtung des Elektrodenkörpers (3) geneigt angeordnet ist.

2. Zelle nach Anspruch 1, **dadurch gekennzeichnet,** daß der geneigte Oberflächenteil (19) poliert ist.

3. Zelle nach Anspruch 1, **dadurch gekennzeichnet,** daß der geneigte Oberflächenteil (19) mit einem reflektierenden Film oder einer reflektierenden Platte versehen ist.

4. Zelle nach Anspruch 1, **dadurch gekennzeichnet,** daß der geneigte Oberflächenteil (19) unter einem Winkel von 45° relativ zur Einsetzrichtung des Elektrodenkörpers (3) liegt.

## Revendications

1. Une cellule destinée à être utilisée pour une électrode du type à écoulement comprenant un passage d'échantillon (7) à l'intérieur d'un corps de cellule transparent (2) et formé de telle sorte qu'une partie de réponse (14) d'un corps d'électrode (3) inséré dans ledit corps de cellule (2) soit située en face de et vienne en contact avec la paroi du passage d'échantillon (7) caractérisée en ce qu'une partie à surface inclinée (19) est formée monobloc avec le corps de cellule (2) sur une face extérieure de la cellule qui est opposée à la face sur laquelle est monté le corps d'électrode (3), et en ce que ladite partie de surface (19) est disposée parallèlement à la direction principale dudit passage d'échantillon (7) et est inclinée par rapport à la direction d'insertion dudit corps d'électrode (3).

2. La cellule selon la revendication 1, caractérisée en ce que ladite partie de surface inclinée (19) est polie au poli miroir.

3. La cellule selon la revendication 1, caractérisée en ce que ladite partie de surface inclinée (19) est munie d'un film réfléchissant ou d'une plaque réfléchissante.

4. La cellule selon la revendication 1, caractérisée en ce que ladite partie de surface inclinée (19) est formée de façon à former un angle de 45° par rapport à la direction d'insertion du corps d'électrode (3).
